# EUROPEAN PATENT SPECIFICATION

(11) **EP 2 815 150 B1**
(45) Date of publication and mention of the grant of the patent: **31.07.2019**
(21) Application number: 13713536.4
(22) Date of filing: 13.02.2013
(51) Int. Cl.: F16D 65/18, F16D 125/06, F16D 125/40, F16D 125/50, F16D 121/24, F16D 123/00, F16D 121/04

(54) **ELECTRICAL BRAKE, PARTICULARLY PARKING BRAKE**
ELEKTRISCHE BREMSE, INSBESONDERE FESTSTELLBREMSE
FREIN ÉLECTRIQUE, EN PARTICULIER FREIN DE STATIONNEMENT

(30) Priority: 15.02.2012 IT MI20120220
(43) Date of publication of application: 24.12.2014
(73) Proprietor: Freni Brembo S.p.A., 24035 Curno (Bergamo) (IT)
(72) Inventor: CARRARA, Marco, I-24035 Curno Bergamo (IT); SALA, Paolo, I-24035 Curno Bergamo (IT); D'ALESSIO, Davide, I-24035 Curno Bergamo (IT)
(74) Representative: Leihkauf, Steffen Falk
(86) International application number: PCT/IB2013/051170
(87) International publication number: WO 2013/121358

(56) References cited:
- DE-A1- 10 054 471
- DE-A1- 19 521 634
- DE-A1-102010 040 426

## Description

It is the object of the present invention an electric brake or parking brake for a disc brake.

Electromechanical parking brakes and emergency brakes are known, which are provided with a rotating electric actuator and a male/female screw thrust unit acting on the hydraulic piston of the operating disc brake or on a special parking piston, in the case when the parking brake constitutes a stand-alone constructive unit. Such a brake is disclosed for example in DE 195 21 634 A1.

Electromechanical disc brakes are further known, with a calliper body having two walls arranged on both sides of the brake disc and connected to one another by two or more connecting bridges extending astride the disc. The wall of the calliper body facing within the vehicle comprises holes for receiving respective securing screws for the pivotably integral and translational securing of the calliper body to the vehicle suspension. In both walls of the calliper body, a seat is obtained, to receive a pad bearing a friction material coating facing the brake disc and at least one of the walls defines one or more seats for a piston adapted to lock the pads against the brake disc to generate the braking force. The piston is, in turn, connected to an electromechanical actuator. The electromechanical actuator comprises, for example, an electric motor, a transmission, and a reducer, which rotates a screw engaging a corresponding female screw. The female screw is rotationally locked and free to translate, and it engages the piston or forms a part integral thereto. In this manner, a rotation of the screw brings about a translation of the piston and of the corresponding pad in engagement against the brake disc.

EP 2 174 037 B1 describes a known example of an electromechanical parking brake, connectable to a fixed calliper of a disc brake and electrically actuatable. DE10054471A1 describes an electromechanically operable disk brake with a parking brake device which is considered a closest prior art to the present invention.

The known parking brakes, while being satisfactory with reference to the tightening force exerted on the brake disc during the actuation of the electric motor and also in the absence of an electric power supply to the motor, have some problems that have been not solved to date.

With particular reference to the assembling operation, currently it is proceeded in the following manner: in order to test the proper operation of the male/female screw assembly, the screw and the female screw are lubricated and assembled. In order to allow the assembling of the female screw in the piston, it has to be released again from the screw and, only after the completion of the connection between the female screw and the piston, the screw can be screwed again in the female screw. Such a procedure is undesirably time-consuming and complex.

A further problem with the electromechanical parking brakes is the difficulty in accurately determining the axial position of the piston, since, due to the assembling tolerances and the consequent axial clearances, such an axial position does not uniquely depend on the angular position of the motor shaft.

Due to this and other reasons, the several single components of the known electromechanical parking brakes have to be manufactured and assembled with very stringent tolerances with a consequent increase of the manufacturing and assembling costs.

Furthermore, the concentration of a plurality of functions in a single piece hinders a differentiated use of different materials for different load conditions, and different tolerances according to different functions.

Therefore, the object of the present invention is to provide an electromechanical parking brake for disc brake, having such characteristics as to obviate at least some of the drawbacks mentioned with reference to the prior art.

In the scope of the general object, a particular object of the present invention is to provide an electromechanical parking brake for disc brake that is easily and quickly assemblable.

A further particular object of the invention is to configure the parking brake so as to be able to unequivocally determine the axial position of the piston depending on the angular position or, in other words, of the number of revolutions of the motor shaft.

These and other objects are achieved by an electromechanical parking brake for disc brake according to claims 1 and 12. Advantageous embodiments are the subject matter of the dependent claims.

In order to better understood the invention, and to appreciate the advantages thereof, some exemplary, nonlimiting embodiments thereof will be described herein below, with reference to the appended Figures, in which:

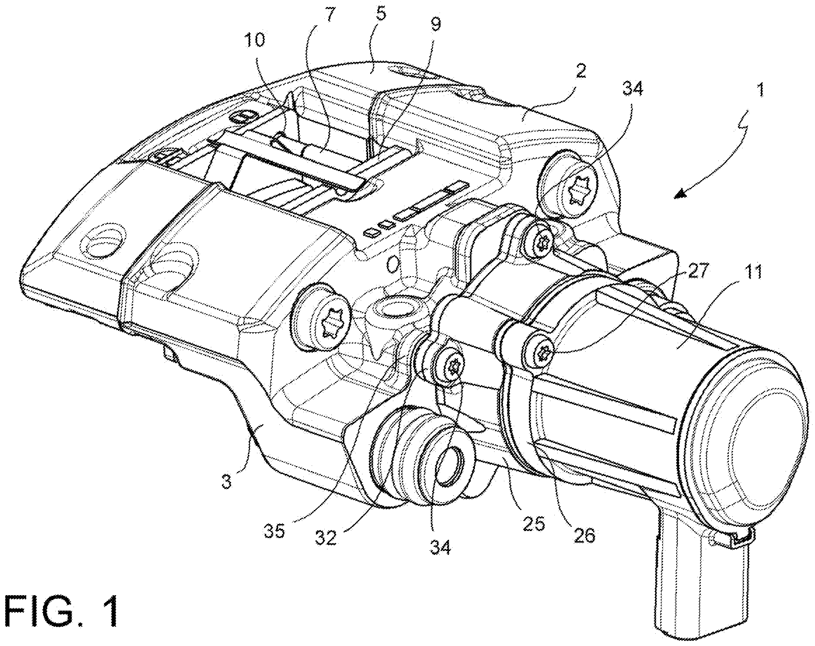

Fig. 1 is a perspective view of a parking brake according to an embodiment of the invention;
Fig. 2 is a sectional view of the parking brake in Fig. 1;
Fig. 3 is an exploded view of a male/female screw assembly and the piston of the parking brake in accordance with an embodiment,
Fig. 4 is an exploded view of an operating screw with axial locking members of the parking brake in accordance with an embodiment,
Fig. 5 is an enlarged view of the detail V in Fig. 2,
Fig. 6 is an exploded view of a motor-reducer unit of the parking brake according to an embodiment,
Figs. 7A - 7F show an assembling sequence of a male/female screw assembly with a piston of the parking brake according to embodiments,
Figs. 8 and 9 are perspective views planetary gear carrying body of a epicycloid reducer of the parking brake according to an embodiment,
Figs. 10 and 11 illustrate embodiments of an anti-rotation pin of the parking brake,
Fig. 12 shows a schematic detail of a male/female screw assembly of the parking brake according to an embodiment.

With reference to the Figures, an electromechanical parking brake is generally indicated with the reference 1. The parking brake 1 comprises a calliper 2 having two side walls 3 spaced apart from each other delimiting a disc space 4 for receiving a portion of a brake disc (not shown). The parking brake 1 further comprises means for securing the calliper 2 to the vehicle suspension or to a calliper of an operating disc brake.

For example, these securing means are obtained in at least two holes defined by one of the side walls 3 and suitable for receiving respective securing screws. Alternatively, the securing means of the parking brake 1 comprise one or more pins and/or cylindrical seats that are suitable for slidably receiving corresponding cylindrical seats and/or pins of a fixed calliper of an operating disc brake for supporting the calliper 2 of the parking brake 1 as a floating calliper.

The two walls 3 of the calliper 2 are connected to one another through a connection structure 5 extending astride of the disc space 4, and each of the walls 3 or a supporting portion connected thereto defines at least one seat for receiving or supporting a pad 9.

In accordance with an embodiment, the supporting portion comprises a supporting pin 7 connected to both side walls 3 and extending astride of the disc space 4. The supporting plates of the pads 9 define, in the upper part thereof (radially outer part, with respect to the axis of the brake disc), a hole 10 that receives the supporting pin 7 for securing the pads in a hanging manner to the calliper 2.

The parking brake 1 further comprises electromechanical thrust means, comprising:
- an electric motor 11,
- first transmission means 13 of the rotating motion of a drive shaft 12 of the electric motor 11 to an epicycloid reducer 14,
- the epicycloid reducer 14,
- second transmission means 15 of the rotating motion of the epicycloid reducer 14 to a male/female screw assembly 16, 17 for transforming the motion,
- the male/female screw assembly 16, 17 for transforming the rotating motion of the epicycloid reducer 14 into a translating motion applicable to a piston 18,
- the piston 18 in contact with the pad 9 for tightening it against the brake disc.

The electric motor 11, the first transmission means 13, the epicycloid reducer 14, the second transmission means 15, and the male/female screw assembly 16, 17 can be arranged coaxially to a central axis X of the piston 18. In this manner, a considerable reduction of the lateral overall dimensions of the thrust unit is obtained, and the connection of the parking brake 1 to a fixed calliper of the disc brake is made easier.

According to an embodiment, the first transmission means 13 comprise a connecting portion 13 formed at the end of the drive shaft 12 and having an outer toothing meshing the satellite toothed wheels 20 of a first train of satellites of the epicycloid reducer 14, so that the drive shaft 12 forms the central pinion 13 of a first reduction stage of the epicycloid reducer 14. In this manner, the functions of the motor-reducer connection, the motion transmission, and the central pinion are combined in a single component, i.e., the drive shaft 12, 13. This involves an axial compaction of the thrust unit, a reduction in the number of the single mechanical components, thus avoiding problems related to clearances and tolerances.

The epicycloid reducer 14 preferably comprises two reduction stages, the first reduction stage of which includes the above-mentioned central (solar) pinion 13 formed by the end 13 of the drive shaft 12, an outer crown with internal toothing 19 locked in rotation and the above-mentioned first train of satellite toothed wheels 20 meshing both the central pinion 13 and the crown 19. The first satellite toothed wheels 20 are supported by a first satellite-bearing plate 21 that, in turn, comprises a toothed central portion 22 constituting a central (solar) pinion of a second reduction stage.

Such a second reduction stage comprises, besides the second central (solar) pinion formed by the toothed central portion 22 of the first satellite-bearing plate 21, the same outer crown with internal toothing 19 and a second train of satellite toothed wheels 23 meshing with both the second central pinion 22 and the crown 19.

The second satellite toothed wheels 23 are supported by a second satellite-bearing plate 24 forming the connection to the male-female screw assembly 16, 17.

In accordance with an embodiment, the axial thicknesses of the satellite toothed wheels 20 of the first reduction stage and of the satellite toothed wheels 23 of the second reduction stage are differentiated according to the torque to be transmitted. Particularly, the thickness of the satellite toothed wheels 20 of the first reduction stage is lower than the thickness of the satellite toothed wheels 23 of the second reduction stage, so as to obtain a further reduction of the axial overall dimensions of the thrust unit.

In accordance with a further development of the invention, the toothed crown 19 is manufactured separated from a reducer housing 25 and subsequently inserted therein. This allows optimizing thicknesses and materials of the toothed crown 19 and the reducer housing 25 independently from one another, to reduce the weight and production cost of the parking brake. Particularly, the reducer housing 25 could be manufactured in a different material from that of the toothed crown, for example, in plastic material, or by aluminium/magnesium alloy die casting.

In accordance with an advantageous embodiment, the reducer housing 25 in plastic material is injection moulded on the toothed crown 19 in metal material, for example, steel. This reduces tolerances and assembling costs for the reducer 14.

Furthermore, according to an embodiment, the electric motor 11 comprises a front flange 26 connectable to the reducer housing 25, for example, by means of two screws 27 insertable in two holes 28 formed in the front flange 26 and that can be screwed in two internally threaded holes 29 of the reducer housing 25. The front flange 26 can comprise centering means, for example, seats or engaging surfaces, suitable for engaging the toothed crown 19 so as to position and center it with respect to the drive shaft 12. In this manner, an expensive precision machining operation of a plurality of inner surfaces of the reducer housing 25 is obviated. By way of example, the means (for example, one or more projections) for rotationally locking the toothed crown 19 (in the case it is not co-moulded with the reducer housing 25) could also be obtained in the front flange 26 of the electric motor 11.

Alternatively, the means for locking the toothed crown 19 in rotation act between the toothed crown 19 and the reducer housing 25, and they can comprise interference connection means (e.g., a toothed crown fit and embedded in the reducer housing), shape fit means (e.g., of the recess-tooth type or of the recess-key type) and/or glueing of the toothed crown 19 in the reducer housing 25.

The second satellite-bearing plate 24 is connected to the reducer housing 25 and centered by means of a radial bearing 30 received in a seat 31 of the reducer housing 25.

The reducer housing 25, in turn, has means for a removable connection with the calliper 2, for example a connection flange 32 with holes 33 for receiving screws 34 that can be screwed in threaded seats 35 of the calliper 2.

In this manner it is possible to pre-assemble the entire electromechanical thrust unit, except for the male-female screw assembly, separately from the calliper 2, as well as it is possible to remove it and connect it again easily during maintenance and repair interventions of the brake.

Furthermore, by virtue of the above-described configuration of the reducer housing 25, the radial bearing 30, and the front flange 26 of the motor, the entire epicycloid reducer 14 is supported and centered within the reducer housing 25 by using a single bearing.

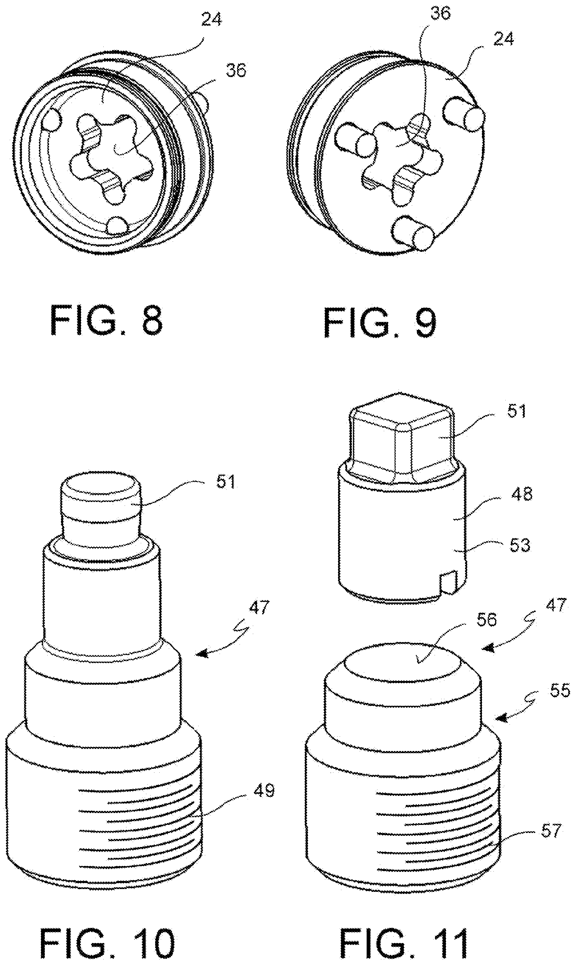

The second satellite-bearing plate 24 (Figs. 8, 9) comprises a blind or, preferably, through central hole 36, which central hole can be coaxial with the central pinions 13, 22 and forms a seat for the transmission of the rotating motion in output from the epicycloid reducer (and precisely of the rotating motion of the second satellite-bearing plate 24) to the operating screw 16 of the male/female screw assembly 16, 17. To this aim, the central hole 36 comprises a shape suitable for a removable and torque-transmitting geometrical coupling, i.e., torque-resistant, with a corresponding coupling portion 37 formed in an outer portion of the operating screw 16 facing the electric motor 11. The shape of the central hole 36 can be undulated in circumferential direction, preferably so as to form a plurality of, for example, five radial petals (as shown in Fig. 8). Alternatively, the central hole 36 can have a polygonal or star-like shape, preferably with rounded angles.

In this manner, the second satellite-bearing plate 24 composes also the above-mentioned means 15 for transmitting the motion from the epicycloid reducer 14 to the male-female screw assembly.

The operating screw 16 is received within the same cylindrical seat 38 that receives the piston 18. Such a cylindrical seat 38 is obtained in one of the side walls 3 of the calliper 2 and has a cylindrical side surface and an annular bottom wall 39 defining a passage opening 40 allowing the passage of the outer portion of the operating screw 16.

The operating screw 16 comprises, besides the outer portion forming the coupling portion 37, an abutment flange 42 abutting in a slidable manner (preferably through the interposition of an axial bearing 41) against an inner surface of the annular bottom wall 39.

The axial bearing 41 can be formed by a roller bearing or, advantageously, a sliding bearing, e.g. a brass or bush.

The outer portion of the operating screw 16 is constrained to an outer surface of the bottom wall 39, for example, by a flat elastic ring 43, for example, a Seeger ring received in a circumferential groove of the operating screw 16 so that the entire operating screw 16 is axially constrained within the seat piston 38.

In accordance with an aspect of the invention, elastic means acting between the calliper 2 and the operating screw 16 are provided for, so as to push the operating screw 16 permanently in axial direction towards the reducer 14 in an abutment position against (the bottom wall 39 of the) calliper 2.

In this manner it is possible to nullify, during the operation of the brake, the axial clearances (that are indispensable in assembling) of the operating screw 16 in the same direction both in the forward step of the piston (activation of the parking brake 1) and in the moving back step of the piston (deactivation of the parking brake). This ensures an accurate control of the piston axial position depending on the angular position of the drive shaft and a reduction of the residual torque during the piston moving back movement. Furthermore, the risks of anomalous damaging of the brake components due to the vibrations of the vehicle and of the brake itself are reduced.

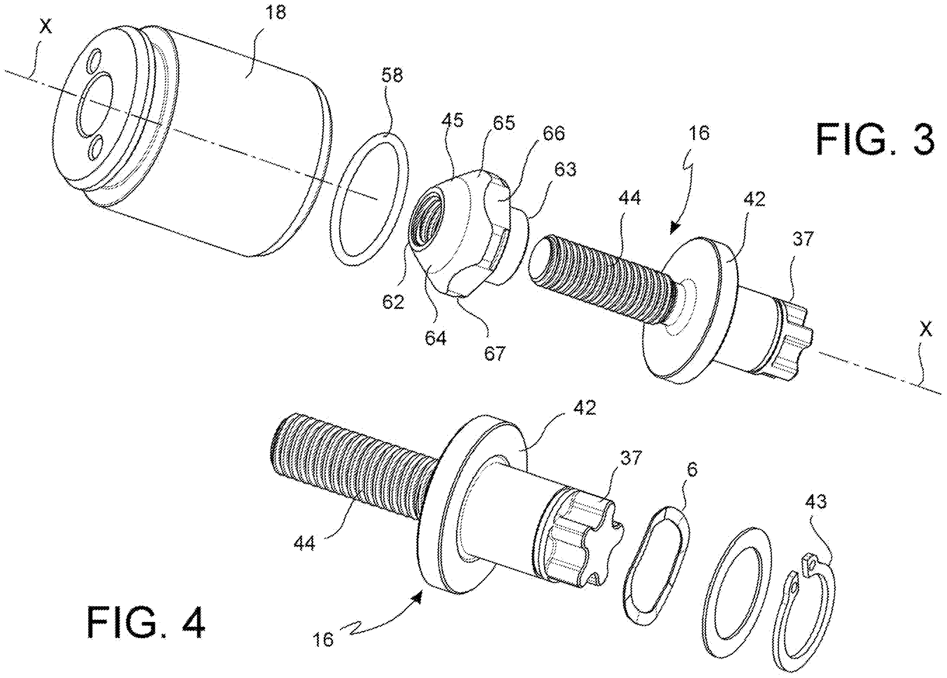

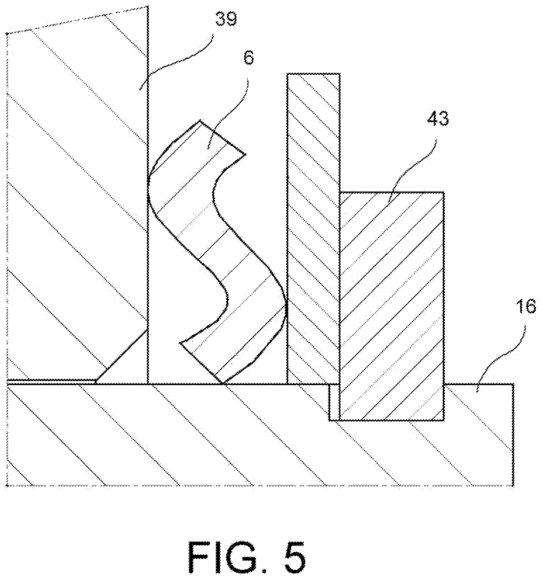

In accordance with an embodiment (Figs. 4 and 5), the elastic means comprise an elastic spring, preferably an undulated ring 6, interposed with elastic preloading between the flat ring 43 and the bottom wall 39 (reducer 14 side) of the calliper 2. By way of example, the undulated ring 6 can be a plate-shaped ring undulated in radial direction or in circumferential direction, preferably in steel for springs.

The operating screw 16 further comprises an externally threaded screw stem 44 overhanging from the abutment flange 42 axially towards the interior of the calliper. The thread of the screw stem 44 engages directly (and particularly, without ball recirculation) a corresponding inner thread of the female screw 17, which is constrained so as not to be able to rotate so that the rotation of the operating screw 16 generates a translational movement of the female screw along the central axis X. Such a rotational constraint can be obtained, for example, by an antirotational pin 47 engaging both the piston 18 and the calliper 2 and by a shape coupling between the piston 18 and the female screw 17.

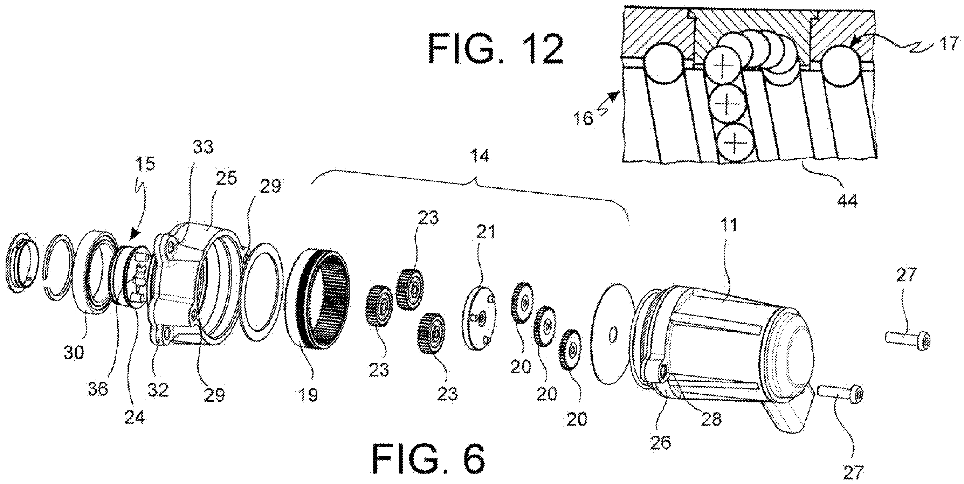

Alternatively (Fig. 12), the thread of the screw stem 44 can engage the inner thread of the female screw 17 by the interposition of rolling members, for example balls or recirculating balls, so as to reduce the friction between the two components.

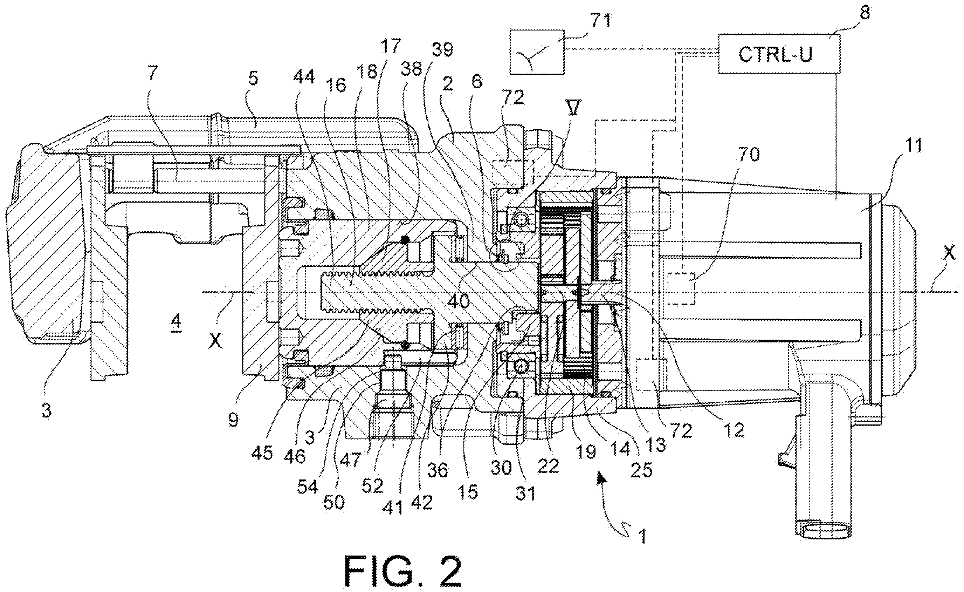

In accordance with an embodiment (Figs. 2 and 10), the antirotational pin 47 has a rear portion 49 externally threaded and screwed in an internally threaded length of a pin seat 50 extending from the outside of the calliper up to the cylindrical seat 38. The antirotational pin 47 further comprises a front portion 51 having a rotating body shape, for example, cylindrical or frusto-conical shape, and which projects in a longitudinal guiding groove 52 (extending in direction of the axis X) formed in the side surface of the piston 18, when the antirotational pin 47 is received and screwed in the pin seat 50,

The rotating body shape of the front portion 51 of the antirotational pin 47 is dictated by the need of screwing the antirotational pin 47 by a rotating movement, while minimizing the clearance between the guiding groove 52 and the antirotational pin 47 itself.

The front portion 51 of the antirotational pin 47 can have two opposite and flat side surfaces (Fig. 11), suitable for abutting against the side surfaces of the guiding groove 52 with a contact area much larger than the contact area between a cylinder and a plane (Fig. 10) . In this case, however, it is not possible to rotate the front portion 51 of the antirotational pin 47 within the guiding groove 52 of the piston. Therefore, the antirotational pin 47 is advantageously formed in two separated pieces. The first separated piece is made up of a front pin 48 forming the preferably squared or parallelepiped-shaped front portion 51, and a base portion 53, for example, having a cylindrical shape. The front pin is insertable (without rotation) into the pin seat 50 up to a position where the front portion 51 is inserted in the guiding groove 52 of the piston 18 and the base portion 53 is received in an inner length 54 of the pin seat 50, which has a complementary shape, for example, a cylindrical shape, to the shape of the base portion 53.

The second separated piece is made up of a locking screw 55 forming the externally threaded rear portion 51 and an engaging surface 56. The locking screw 55 is screwed in a threaded outer length 57 of the pin seat 50 and engages the base portion 53 of the front pin 48, thus locking it in place.

The antirotational pin prevents an undesired rotation of the piston 18, particularly in the release step of the parking force, and ensures an univocal correlation between the angular position of the drive shaft (or, in other words, between the number of revolutions of the motor starting from a reference position) and the axial displacement of the piston 18.

According to an embodiment, the female screw 17 is manufactured separately from the piston 18 and has a thrust portion 45, for example at least partially conical, suitable for engaging a corresponding thrust seat 46 of the piston 18 having a shape at least partially complementary to that of the thrust portion 45.

In this manner, threading operations on the rear side of the piston are avoided.

In order to compact the thrust unit, the piston 18 is in the form of a hollow cup and receives the female screw 17 therein and, preferably, a main portion of the operating screw 16.

Furthermore, hooking means coupling the piston 18 to the female screw 17 can be provided, so that they translate together not only in the approaching direction, but also in the moving away direction of the piston from the disc. This allows a controlled positioning of the piston even upon the release of the parking brake.

In accordance with an aspect of the invention, the hooking means comprise locking means 58, 59, 61, for example snap-locking means, configured so as to lock the female screw 17 automatically in the thrust seat 46 of the piston 18, when the male/female screw assembly 16, 17 that is preassembled (i.e., with the female screw 17 already screwed on the operating screw 16) is axially pushed into the thrust seat 46. By virtue of the automatic actuation of the locking means 58, 59, 61 in response to a simple introduction of the male/female screw assembly 16, 17 into the thrust seat of the piston 18, the assembling of the brake is made quicker, and an undesired separation of the female screw 17 from male/female screw assemblies previously assembled, lubricated, and tested is avoided.

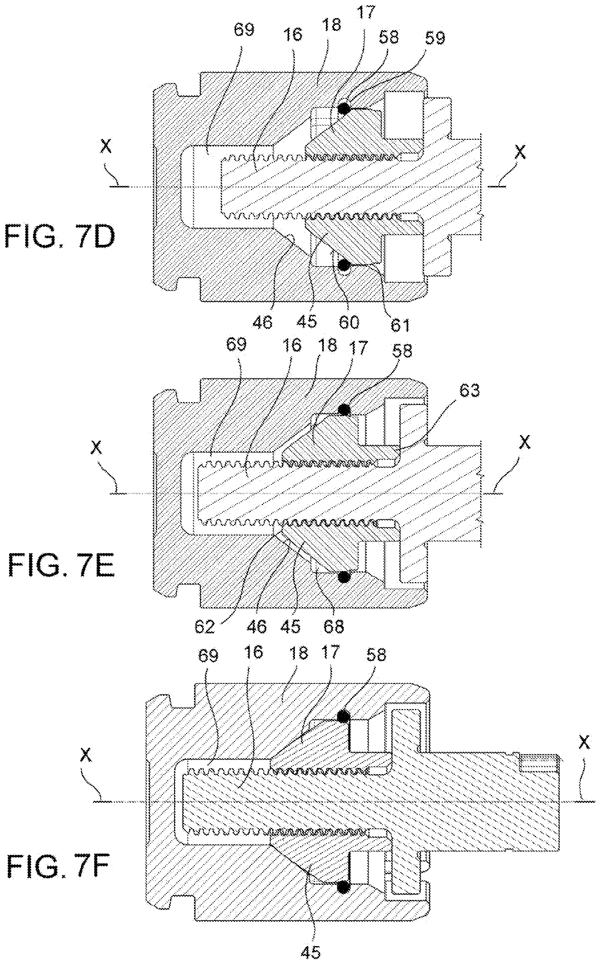

The locking means 58, 59, 61 comprise an elastically dilatable ring 58 that is open or, preferably, closed (for example, an O-Ring in rubber or other elastic material) introduced in an annular groove 59 of the piston 18 and suitable for elastically snapping in an axial abutment configuration against a shoulder 61 of the female screw 17, in response to an introduction of the female screw 17 in the thrust seat 46 of the piston 18 (Fig. 7F).

The depth of the annular groove 59, the dimension of the closed elastic ring 58, and a wedge-shaped surface 60 formed near the shoulder 61 (and at least partially tilted with respect to the central axis X so as to act as a ramp or enlarging wedge) are configured so that:
- during the introduction of the female screw 17 into the thrust seat 46 of the piston 18, the wedge-shaped surface 60 radially enlarges the closed elastic ring 58 in the annular groove 59, allowing the thrust portion 45 of the female screw 17 to pass through the closed elastic ring 58 and to be positioned in the predetermined position thereof in contact with the thrust seat 46, and
- upon reaching the predetermined position of the thrust portion 45 in contact with the thrust seat 46, the wedge-shaped surface 60 releases the closed elastic ring 58, allowing for an elastic shrinkage thereof in radial direction such as to axially engage the shoulder 61 and prevent the female screw 17 from coming off (of the thrust portion 45) from the thrust seat 46.

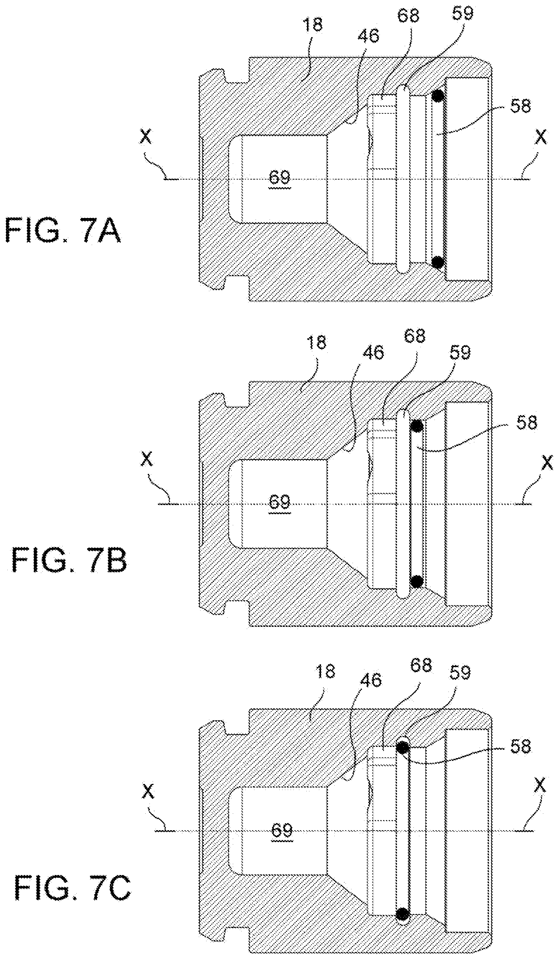

A possible assembling sequence of the male/female screw assembly 16, 17 in the piston 18 with automatic locking of the female screw 17 into the thrust seat 46 is illustrated in the Figs. 7A - 7F.

In accordance with an alternative embodiment, the positioning of the single components of the locking means 58, 59, 61 can be inverted compared to what has been described and illustrated before in Figs. 2 and 7A - 7F. Particularly, the locking means 58, 59, 61 can comprise an elastically dilatable closed ring (particularly, an O-Ring) introduced in an annular groove of the female screw and suitable for elastically snapping in an axial abutment configuration against a shoulder of the piston, in response to an introduction of the female screw in engagement with the piston.

In this case also, the depth of the annular groove, the dimension of the closed elastic ring, and a wedge-shaped surface formed near the shoulder (and at least partially tilted with respect to the central axis X so as to act as a ramp or enlarging wedge) are configured so that:
- upon approaching of the female screw to the thrust seat of the piston, the wedge-shaped surface radially deforms the closed elastic ring in the annular groove, allowing the thrust portion of the female screw to be positioned in the predetermined position thereof in contact with the thrust seat, and
- upon reaching the predetermined position of the thrust portion in contact with the thrust seat, the wedge-shaped surface releases the closed elastic ring, allowing an elastic return thereof in radial direction such as to axially engage the shoulder and prevent the female screw from coming off (of the thrust portion) from the thrust seat.

In accordance with an embodiment (Figs. 3, 7), the female screw 17 has a front end 62 facing the piston and the pads and a rear end 63 facing the reducer 14. At the front end 62, the female screw 17 forms the above-mentioned frusto-conical thrust portion 45 suitable for engaging the corresponding frusto-conical thrust seat 46 of the piston. Possibly, the thrust portion 45 has a first front frusto-conical length 64 having a first tilting angle with respect to the central axis X, and an adjacent second rear frusto-conical length 65 having a second tilting angle with respect to the central axis X lesser than first tilting angle (Fig. 7F). To the thrust portion 47, an antirotational portion 66 with one or more radial projections and/or recesses is connected in the back direction, for example, an undulation along an outer perimeter 67 thereof suitable for engaging a corresponding antirotational seat 68 of the piston 18 by a geometrical coupling pivotably integral about the central axis X. In the antirotational portion 66, particularly in a rear zone of the radial projections, a step 68 is formed, with a face facing the back direction (opposite to the introduction direction of the female screw into the piston) forming the above-mentioned shoulder 61.

The cavity of the piston 18 forms a front space 69 suitable for receiving a front end of the operating screw 16. To the front space 69 the frusto-conical thrust seat 46 is connected in the back direction, and on the rear side of the thrust seat 46, the antirotational seat 68 with the annular groove 59 containing the closed elastic ring 58.

In accordance with an embodiment, the operating screw 16 and the female screw 17 can be produced by means of a mould, by casting or sintering, and the gears of the epicycloid reducer 14 can also be produced by sintering in order to facilitate the manufacturing thereof and to reduce the manufacturing costs of the brake.

In order to control the axial position of the piston 18 and to actuate the electric motor 11, a control unit 8 (schematically illustrated in Fig. 2) is provided for, in signal communication with an angular position sensor 70 of the drive shaft 12, for example, an encoder integrated in the electric motor 11, and with a user interface 71 (for example, a pedal, a button, or a parking lever). The control unit 8 is suitable for controlling the power supply of the electric motor 11 depending on the angular position of the drive shaft 12 detected by the position sensor 70 and on signals of the user interface 71 representative of activation or deactivation controls of the parking by the user.

In accordance with a further embodiment, the parking brake 1 comprises a temperature sensor 72 in signal communication with the control unit 8, which controls the electric power supply of the electric motor 11 also in dependency of the temperature or of a temperature gradient detected by the temperature sensor 72. The temperature sensor can be received in the housing of the electric motor 11 or, alternatively, in the reducer housing or in the side wall of the calliper receiving the piston 18. Once the current thermal conditions at which the parking brake is operating are known, it is possible to more accurately infer the mechanical efficiency parameters of the electric motor (output torque) and of the reducer (internal resistances, viscosity of the lubricant, output torque) and to more accurately obtain the planned pressure and braking torque.

The parking brake described hereto could be slidably connected to a fixed calliper of the disc brake, so as to act as a parking brake with floating calliper.

In use, the current power supply to the electric motor rotates the drive shaft, which transmits the motion thereof directly to the first reduction stage of the epicycloid reducer, which reduces the rotational speed and increases the torque. Such a reduced motion is transmitted to the male/female screw assembly, which converts it into a translating motion and applies it to the piston that, in turn, pushes the pad against the brake disc to lock it. The resistance of the direct engagement between the threads of the male/female screw assembly is sufficient for maintaining the axial pressure on the disc even in the absence of a torque exerted on the screw.

The parking brake of the present invention is easily and quickly assemblable and ensures an accurate control of the axial position of the piston depending on the angular position (or, in other words, of the number of revolutions starting from a reference position) of the drive shaft both during the forward movement and during the backward movement of the piston.

It shall be apparent that, to the parking brake according to the present invention, one of ordinary skill in the art, with the aim of meeting contingent, specific needs, will be able to make further modifications and variations, in any case all of which fall within the protection scope of the invention, as defined by the following claims.

## Claims

1. Parking brake (1) for disc brake, comprising:
- a calliper (2) having two side walls (3) spaced apart from each other delimiting a space (4) for receiving a portion of a brake disc, said side walls (3) being connected to one another through a connection structure (5) extending astride of the disc space (4),
- means (7) for supporting at least a pad (9) at each one of said side walls (3),
- a electromechanical thrust unit connected to one of said side walls (3) of the calliper (2) and adapted to push the pads (9) against the brake disc to lock it, wherein said electromechanical thrust unit comprises:
- a piston (18) adapted to lock the pad (9) against the brake disc,
- an electric motor (11),
- a male/female screw assembly (16, 17) connected between the electric motor (11) and the piston (18) for transforming the rotating motion generated by the motor (11) into a translating motion which can be applied to the piston (18),
- hooking means connecting the piston (18) to a female screw (17) of the male/female screw assembly (16, 17) so that they translate together in the direction of a central axis (X) of the piston (18),
wherein the hooking means comprise locking means (58, 59, 61) automatically locking the female screw (17) to the piston (18) when the preassembled male/female screw assembly (16, 17) is pushed in a thrust seat (46) of the piston (18),
**characterized in that** the locking means (58, 59, 61) comprise an elastically dilatable closed ring (58) received in an annular groove (59) of the piston (18) and suitable for elastically snapping in an axial abutment configuration against a shoulder (61) of the female screw (17) in response to an introduction of the female screw (17) in the thrust seat (46) of the piston (18),
and **in that** the female screw (17) forms next to the shoulder (61) a wedge-shaped surface (60) at least partially tilted with respect to the central axis (X) so that:
- during the introduction of the female screw (17) in the thrust seat (46) of the piston (18), the wedge-shaped surface (60) radially enlarges the closed elastic ring (58) in the annular groove (59), allowing a thrust portion (45) of the female screw (17) to be positioned in a predetermined position in contact with the thrust seat (46) of the piston (18), and
- upon reaching the predetermined position of the thrust portion (45), the wedge-shaped surface (60) releases the closed elastic ring (58), allowing for an elastic shrinkage thereof in radial direction such as to axially engage the shoulder (61) and prevent the female screw (17) from coming off from the thrust seat (46).

2. Parking brake (1) according to any one of the previous claims, comprising elastic means acting between the calliper (2) and the operating screw (16) so as to push the operating screw (16) permanently in axial direction towards a reducer (14) of the electromechanical thrust unit in an abutment position against the calliper (2).

3. Parking brake (1) according to claim 2, wherein the operating screw (16) forms an outer portion constrained to an outer surface of the calliper (2) through a flat ring (43) received in a circumferential groove of the operating screw (16), and an abutment flange (42) abutting in a slidable manner, possibly through the interposition of an axial bearing (41), against an inner surface of the calliper (2) so that the entire operating screw 16 is axially constrained to the calliper (2), wherein the elastic means comprise an undulated ring (6), interposed with elastic preloading between the flat ring (43) and the outer surface of the calliper (2).

4. Parking brake (1) according to claim 3, wherein the undulated ring (6) is a plate-shaped ring undulated in radial direction.

5. Parking brake (1) according to any one of the previous claims, comprising an antirotational pin (47) received in a pin seat (50) of the calliper (2) and having a front portion (51) projecting in a guiding groove (52) in a side surface of the piston (18) so as to prevent the piston from rotating about the central axis (X).

6. Parking brake (1) according to claim 5, wherein the front portion (51) of the antirotational pin (47) has two opposite and flat side surfaces suitable for abutting against corresponding side surfaces of the guiding groove (52).

7. Parking brake (1) according to claim 6, wherein the antirotational pin (47) is made up of a front pin (48) forming the front portion (51), as well as of a locking screw (55) separated from the front pin and screwed in the pin seat (50) so as to lock the front pin (48) in place.

8. Parking brake (1) according to any one of the previous claims, wherein a reducer (14) of the electromechanical thrust unit comprises a planetary gear plate (24) forming a central hole (36) suitable for a geometrical coupling, pivotably integral and removable with a coupling portion (37) of an operating screw (16) of the male/female screw assembly (16, 17).

9. Parking brake (1) according to claim 8, wherein the central hole (36) is undulated in circumferential direction and forms a plurality of radial petals.

10. Parking brake (1) according to any one of the previous claims, wherein a reducer (14) of the electromechanical thrust unit comprises an epicycloid gear and a reducer housing (25) made of a plastic material injection moulded on a crown gear (19) of said epicycloid gear.

11. Parking brake (1) according to any one of the previous claims, comprising a control unit (8) in signal communication with an angular position sensor (70) of the drive shaft (12) and with a user interface (71), said control unit (8) being suitable for controlling the power supply of the electric motor (11) depending on the angular position of the drive shaft (12) detected by the position sensor (70) and on signals of the user interface (71).

12. Parking brake (1) for disc brake, comprising:
- a calliper (2) having two side walls (3) spaced apart from each other delimiting a space (4) for receiving a portion of a brake disc, said side walls (3) being connected to one another through a connection structure (5) extending astride of the disc space (4),
- means (7) for supporting at least a pad (9) at each one of said side walls (3),
- a electromechanical thrust unit connected to one of said side walls (3) of the calliper (2) and adapted to push the pads (9) against the brake disc to lock it, wherein said electromechanical thrust unit comprises:
- a piston (18) adapted to lock the pad (9) against the brake disc,
- an electric motor (11),
- a male/female screw assembly (16, 17) connected between the electric motor (11) and the piston (18) for transforming the rotating motion generated by the motor (11) into a translating motion which can be applied to the piston (18),
- hooking means connecting the piston (18) to a female screw (17) of the male/female screw assembly (16, 17) so that they translate together in the direction of a central axis (X) of the piston (18),
wherein the hooking means comprise locking means (58, 59, 61) automatically locking the female screw (17) to the piston (18) when the preassembled male/female screw assembly (16, 17) is pushed in a thrust seat (46) of the piston (18),
**characterized in that** the locking means (58, 59, 61) comprise an elastically dilatable closed ring introduced in an annular groove of the female screw and suitable for elastically snapping in an axial abutment configuration against a shoulder of the piston, in response to an introduction of the female screw in engagement with the piston,
and **in that** the piston forms next to the shoulder a wedge-shaped surface at least partially tilted with respect to the central axis (X) so that:
- upon approaching of the female screw to the thrust seat of the piston, the wedge-shaped surface radially deforms the closed elastic ring in the annular groove, allowing the thrust portion of the female screw to be positioned in the predetermined position thereof in contact with the thrust seat, and
- upon reaching the predetermined position of the thrust portion in contact with the thrust seat, the wedge-shaped surface releases the closed elastic ring, allowing an elastic return thereof in radial direction such as to axially engage the shoulder and prevent the female screw from coming off from the thrust seat.

## Patentansprüche

1. Parkbremse (1) für eine Scheibenbremse, welche aufweist:
- einen Sattel (2) mit zwei voneinander beabstandeten Seitenwänden (3), die einen Raum (4) zur Aufnahme eines Abschnitts einer Bremsscheibe begrenzen, wobei die Seitenwände (3) durch eine Verbindungsstruktur (5) miteinander verbunden sind, der sich über den Scheibenraum (4) erstreckt;
- Mittel (7) zum Tragen von zumindest einem Klotz (9) an einer jeden der Seitenwände (3),
- eine elektromechanische Druckeinheit, die mit einer der Seitenwände (3) des Sattels (2) verbunden und dazu ausgelegt ist, die Klötze (9) gegen die Bremsscheibe zu drücken, um diese zu arretieren,
wobei die elektromechanische Druckeinheit aufweist:
- einen Kolben (18), der dazu ausgelegt ist, den Klotz (9) gegen die Bremsscheibe zu arretieren,
- einen Elektromotor (11),
- eine Außen-/lnnengewindeanordnung (16, 17), die zwischen dem Elektromotor (11) und dem Kolben (18) angeschlossen ist, um die vom Motor (11) erzeugte Drehbewegung in eine Translationsbewegung umzuwandeln, die auf den Kolben (18) ausgeübt werden kann,
- Hakmittel, die den Kolben (18) mit einem Innengewinde (17) der Außen-/Innengewindeanordnung (16, 17) verbinden, so dass sie in Richtung einer Mittelachse (X) des Kolbens (18) gemeinsam verlagert werden,
- wobei die Hakmittel Arretiermittel (58, 59, 61) aufweisen, um das Innengewinde (17) mit dem Kolben (18) automatisch zu arretieren, wenn die vormontierte Außen-/lnnengewindeanordnung (16, 17) in einen Drucksitz (46) des Kolbens (18) gedrückt wird,
**dadurch gekennzeichnet, dass** die Arretiermittel (58, 59, 61) einen elastisch erweiterbaren geschlossenen Ring (58) aufweisen, der in einer Ringnut (59) des Kolbens (18) aufgenommen und dazu geeignet ist, in Antwort auf ein Einführen des Innengewindes (17) in den Drucksitz (46) des Kolbens (18) elastisch in eine axiale Stützkonfiguration gegen eine Schulter (61) des Innengewindes (17) zu schnappen,
und dass das Innengewinde (17) nächst der Schulter (61) eine keilförmige Oberfläche (60) bildet, die zumindest in Bezug auf die Mittelachse (X) so geneigt ist, dass:
- während des Einführens des Innengewindes (17) in den Drucksitz (46) des Kolbens (18), die keilförmige Oberfläche (60) den geschlossenen elastischen Ring (58) in der Ringnut (59) radial vergrößert, was erlaubt, dass ein Druckabschnitt (45) des Innengewindes (17) in einer vorbestimmten Kontaktposition mit dem Drucksitz (46) des Kolbens (18) positioniert wird, und
- beim Erreichen der vorbestimmten Position des Druckabschnitts (45), die keilförmige Oberfläche (60) den geschlossenen elastischen Ring (58) löst, was dessen elastischen Schrumpf in radialer Richtung erlaubt, um die Schulter (61) axial zu ergreifen und zu verhindern, dass sich das Innengewinde (17) von dem Drucksitz (46) löst.

2. Parkbremse (1) nach einem der vorhergehenden Ansprüche, die elastische Mittel aufweist, die zwischen dem Sattel (2) und dem Arbeitsgewinde (16) wirken, um in einer Abstützposition gegen den Sattel (2) das Arbeitsgewinde (16) permanent in axialer Richtung zu einem Untersetzer (14) der elektromechanischen Druckeinheit zu drücken.

3. Parkbremse (1) nach Anspruch 2, wobei das Arbeitsgewinde (16) einen Außenabschnitt bildet, der an einer Außenoberfläche des Sattels (2) durch einen in einer Umfangsnut des Arbeitsgewindes (16) aufgenommenen flachen Ring (43) gehalten ist, sowie einen Stützflansch (42), der sich gegebenenfalls durch die Einfügung eines Axiallagers (41) gegen eine Innenoberfläche des Sattels (2) verschiebbar abstützt, so dass das gesamte Arbeitsgewinde (16) an dem Sattel (2) axial gehalten ist,
wobei die elastischen Mittel einen gewellten Ring (6) aufweisen, der mit einer elastischen Vorlast zwischen dem flachen Ring (43) und der Außenoberfläche des Sattels (2) eingefügt ist.

4. Parkbremse (1) nach Anspruch 3, wobei der gewellte Ring (16) ein in radialer Richtung gewellter plattenförmiger Ring ist.

5. Parkbremse (1) nach einem der vorhergehenden Ansprüche, die einen Drehverhinderungsstift (47) aufweist, der in einem Stiftsitz (50) des Sattels (2) aufgenommen ist und einen vorderen Abschnitt (51) aufweist, der in eine Führungsnut (52) in einer Seitenoberfläche des Kolbens (18) vorsteht, um eine Drehung des Kolbens um die Mittelachse (X) herum zu verhindern.

6. Parkbremse (1) nach Anspruch 5, wobei der vordere Abschnitt (51) des Drehverhinderungsstifts (47) zwei entgegengesetzte und flache Seitenflächen aufweist, die zur Abstützung gegen entsprechende Seitenflächen der Führungsnut (52) geeignet sind.

7. Parkbremse (1) nach Anspruch 6, wobei der Drehverhinderungsstift (47) aufgebaut ist aus einem vorderen Stift (48), der den vorderen Abschnitt (51) bildet, sowie einer Arretierschraube (55), die von dem vorderen Stift getrennt ist und in den Stifsitz (50) eingeschraubt ist, um den vorderen Stift (48) örtlich zu arretieren.

8. Parkbremse (1) nach einem der vorhergehenden Ansprüche, wobei ein Untersetzer (14) der elektromechanischen Druckeinheit eine Planetengetriebe-Platte (24) aufweist, die ein Mittelloch (36) bildet, das zur geometrischen Kopplung, integriert schwenkbar und entfernbar mit einem Kupplungsabschnitt 837) eines Arbeitsgewindes (16) der Außen-/Innengewindeanordnung (16, 17) geeignet ist.

9. Parkbremse (1) nach Anspruch 8, wobei das Mittelloch (46) in Umfangsrichtung gewellt ist und eine Mehrzahl von radialen Blättern bildet.

10. Parkbremse (1) nach einem der vorhergehenden Ansprüche, wobei ein Untersetzer (14) der elektromechanischen Druckeinheit ein Epizykloidgetriebe und ein Untersetzergehäuse (25) aufweist, das aus Kunststoffmaterial auf ein Kronenrad (19) des Epizykloidgetriebes spritzgegossen ist.

11. Parkbremse (1) nach einem der vorhergehenden Ansprüche, die eine Steuereinheit (8) in Signalverbindung mit einem Winkelpositionssensor (70) der Antriebswelle (12) und mit einer Benutzerschnittstelle (71) aufweist, wobei die Steuereinheit (8) dazu geeignet ist, die Stromversorgung des Elektromotors (11) in Abhängigkeit von der vom Positionssensor (70) detektierten Winkelposition der Antriebswelle (12) und von Signalen von der Benutzerschnittstelle (71) zu steuern.

12. Parkbremse (1) für eine Scheibenbremse, welche aufweist:
- einen Sattel (2) mit zwei voneinander beabstandeten Seitenwänden (3), die einen Raum (4) zur Aufnahme eines Abschnitts einer Bremsscheibe begrenzen, wobei die Seitenwände (3) durch eine Verbindungsstruktur (5) miteinander verbunden sind, der sich über den Scheibenraum (4) erstreckt;
- Mittel (7) zum Tragen von zumindest einem Klotz (9) an einer jeden der Seitenwände (3),
- eine elektromechanische Druckeinheit, die mit einer der Seitenwände (3) des Sattels (2) verbunden und dazu ausgelegt ist, die Klötze (9) gegen die Bremsscheibe zu drücken, um diese zu arretieren,
wobei die elektromechanische Druckeinheit aufweist:
- einen Kolben (18), der dazu ausgelegt ist, den Klotz (9) gegen die Bremsscheibe zu arretieren,
- einen Elektromotor (11),
- eine Außen-/lnnengewindeanordnung (16, 17), die zwischen dem Elektromotor (11) und dem Kolben (18) angeschlossen ist, um die vom Motor (11) erzeugte Drehbewegung in eine Translationsbewegung umzuwandeln, die auf den Kolben (18) ausgeübt werden kann,
- Hakmittel, die den Kolben (18) mit einem Innengewinde (17) der Außen-/Innengewindeanordnung (16, 17) verbinden, so dass sie in Richtung einer Mittelachse (X) des Kolbens (18) gemeinsam verlagert werden,
- wobei die Hakmittel Arretiermittel (58, 59, 61) aufweisen, um das Innengewinde (17) zu dem Kolben (18) automatisch zu arretieren, wenn die vormontierte Außen-/lnnengewindeanordnung (16, 17) in einen Drucksitz (46) des Kolbens (18) gedrückt wird,
**dadurch gekennzeichnet, dass** die Arretiermittel (58, 59, 61) einen elastisch erweiterbaren geschlossenen Ring aufweisen, der in eine Ringnut des Innengewindes eingesetzt und dazu geeignet ist, in Antwort auf ein Einführen des Innengewindes in Eingriff mit dem Kolben elastisch in eine axiale Stützkonfiguration gegen eine Schulter des Kolbens zu schnappen,
und dass der Kolben nächst der Schulter eine keilförmige Oberfläche bildet, die zumindest in Bezug auf die Mittelachse (X) so geneigt ist, dass:
- beim Annähern des Innengewindes an den Drucksitz des Kolbens, die keilförmige Oberfläche den geschlossenen elastischen Ring in der Ringnut radial verformt, was erlaubt, dass der Druckabschnitt des Innengewindes in seiner vorbestimmten Kontaktposition mit dem Drucksitz positioniert wird, und
- beim Erreichen der vorbestimmten Kontaktposition des Druckabschnitts mit dem Drucksitz die keilförmige Oberfläche den geschlossenen elastischen Ring löst, was dessen elastische Rückkehr in radialer Richtung erlaubt, um die Schulter axial zu ergreifen und zu verhindern, dass sich das Innengewinde von dem Drucksitz löst.

## Revendications

1. Frein de stationnement (1) pour frein à disque, comprenant :
- un étrier (2) ayant deux parois latérales (3) espacées l'une de l'autre délimitant un espace (4) pour recevoir une portion d'un disque de frein, lesdites parois latérales (3) étant reliées l'une à l'autre par une structure de liaison (5) s'étendant à cheval sur l'espace de disque (4),
- des moyens (7) pour supporter au moins une plaquette (9) au niveau de chacune desdites parois latérales (3),
- une unité de poussée électromécanique reliée à l'une desdites parois latérales (3) de l'étrier (2) et adaptée pour pousser les plaquettes (9) contre le disque de frein pour le bloquer,
dans lequel ladite unité de poussée électromécanique comprend :
- un piston (18) adapté à bloquer la plaquette (9) contre le disque de frein,
- un moteur électrique (11),
- un ensemble de vis mâle/femelle (16, 17) relié entre le moteur électrique (11) et le piston (18) pour transformer le mouvement de rotation généré par le moteur (11) en un mouvement de translation qui peut être appliqué au piston (18),
- des moyens d'accrochage reliant le piston (18) à une vis femelle (17) de l'ensemble de vis mâle/femelle (16, 17) de sorte qu'ils effectuent une translation ensemble dans la direction d'un axe central (X) du piston (18),
dans lequel les moyens d'accrochage comprennent des moyens de blocage (58, 59, 61) bloquant automatiquement la vis femelle (17) contre le piston (18) lorsque l'ensemble de vis mâle/femelle pré-assemblé (16, 17) est poussé dans un siège de poussée (46) du piston (18),
**caractérisé en ce que** les moyens de blocage (58, 59, 61) comprennent un anneau fermé élastiquement dilatable (58) reçu dans une rainure annulaire (59) du piston (18) et approprié pour s'encliqueter élastiquement dans une configuration de butée axiale contre un épaulement (61) de la vis femelle (17) en réponse à une introduction de la vis femelle (17) dans le siège de poussée (46) du piston (18),
et **en ce que** la vis femelle (17) forme à côté de l'épaulement (61) une surface en forme de coin (60) au moins partiellement inclinée par rapport à l'axe central (X) de sorte que :
- pendant l'introduction de la vis femelle (17) dans le siège de poussée (46) du piston (18), la surface en forme de coin (60) élargit radialement l'anneau élastique fermé (58) dans la rainure annulaire (59), de sorte à permettre à une portion de poussée (45) de la vis femelle (17) d'être positionnée dans une position prédéfinie en contact avec le siège de poussée (46) du piston (18), et
- lorsqu'elle atteint la position prédéfinie de la portion de poussée (45), la surface en forme de coin (60) libère l'anneau élastique fermé (58), de sorte à permettre un rétrécissement élastique de celui-ci dans une direction radiale de façon à entrer en prise dans un sens axial avec l'épaulement (61) et empêcher la vis femelle (17) de se détacher siège de poussée (46).

2. Frein de stationnement (1) selon l'une quelconque des revendications précédentes, comprenant des moyens élastiques agissant entre l'étrier (2) et la vis de commande (16) de sorte à pousser la vis de commande (16) de façon permanente dans la direction axiale vers un réducteur (14) de l'unité de poussée électromécanique dans une position de butée contre l'étrier (2).

3. Frein de stationnement (1) selon la revendication 2, dans lequel la vis de commande (16) forme une portion externe retenue sur une surface externe de l'étrier (2) par l'intermédiaire d'un anneau plat (43) reçu dans une rainure circonférentielle de la vis de commande (16), et une bride de butée (42) butant de manière apte à coulisser, éventuellement par l'interposition d'un palier axial (41), contre une surface interne de l'étrier (2) de sorte que la vis de commande tout entière (16) est axialement retenue contre l'étrier (2),
dans lequel les moyens élastiques comprennent un anneau ondulé (6) interposé avec une précontrainte élastique entre l'anneau plat (43) et la surface externe de l'étrier (2).

4. Frein de stationnement (1) selon la revendication 3, dans lequel l'anneau ondulé (6) est un anneau en forme de plaque ondulé dans la direction radiale.

5. Frein de stationnement (1) selon l'une quelconque des revendications précédentes, comprenant une broche anti-rotation (47) reçue dans un siège de broche (50) de l'étrier (2) et ayant une portion avant (51) faisant saillie dans une rainure de guidage (52) dans une surface latérale du piston (18) de façon à empêcher le piston de tourner autour de l'axe central (X).

6. Frein de stationnement (1) selon la revendication 5, dans lequel la portion avant (51) de la broche anti-rotation (47) a deux surfaces latérales opposées et planes appropriées pour buter contre des surfaces latérales correspondantes de la rainure de guidage (52).

7. Frein de stationnement (1) selon la revendication 6, dans lequel le broche anti-rotation (47) est constituée d'une broche avant (48) formant la portion avant (51), ainsi que d'une vis de blocage (55) séparée de la broche avant et vissée dans le siège de broche (50) de manière à bloquer la broche avant (48) en place.

8. Frein de stationnement (1) selon l'une quelconque des revendications précédentes, dans lequel un réducteur (14) de l'unité de poussée électromécanique comprend un disque d'engrenage planétaire (24) formant un trou central (36) approprié pour un accouplement géométrique, solidaire en pivotement et amovible avec une partie d'accouplement (37) d'une vis de commande (16) de l'ensemble de vis mâle/femelle (16, 17).

9. Frein de stationnement (1) selon la revendication 8, dans lequel le trou central (36) est ondulé dans une direction circonférentielle et forme une pluralité de pétales radiaux.

10. Frein de stationnement (1) selon l'une quelconque des revendications précédentes, dans lequel un réducteur (14) de l'unité de poussée électromécanique comprend un engrenage épicycloïdal et un boîtier de réducteur (25) fait d'une matière plastique moulée par injection sur une roue conique (19) dudit engrenage épicycloïdal.

11. Frein de stationnement (1) selon l'une quelconque des revendications précédentes, comprenant une unité de commande (8) en communication de signal avec un capteur de position angulaire (70) de l'arbre d'entraînement (12) et avec une interface utilisateur (71), ladite unité de commande (8) étant appropriée pour commander l'alimentation électrique dudit moteur électrique (11) en fonction de la position angulaire de l'arbre d'entraînement (12) détectée par le capteur de position (70) et de signaux de l'interface utilisateur (71).

12. Frein de stationnement (1) pour frein à disque, comprenant :
- un étrier (2) ayant deux parois latérales (3) espacées l'une de l'autre délimitant un espace (4) pour recevoir une portion d'un disque de frein, lesdites parois latérales (3) étant reliées l'une à l'autre par une structure de liaison (5) s'étendant à cheval sur l'espace de disque (4),
- des moyens (7) pour supporter au moins une plaquette (9) au niveau de chacune desdites parois latérales (3),
- une unité de poussée électromécanique reliée à l'une desdites parois latérales (3) de l'étrier (2) et adaptée à pousser les plaquettes (9) contre le disque de frein pour le bloquer,
dans lequel ladite unité de poussée électromécanique comprend :
- un piston (18) adapté à bloquer la plaquette (9) contre le disque de frein,
- un moteur électrique (11),
- un ensemble de vis mâle/femelle (16, 17) relié entre le moteur électrique (11) et le piston (18) pour transformer le mouvement de rotation généré par le moteur (11) en un mouvement de translation qui peut être appliqué au piston (18),
- des moyens d'accrochage reliant le piston (18) à une vis femelle (17) de l'ensemble de vis mâle/femelle (16, 17) de sorte qu'ils effectuent une translation ensemble dans la direction d'un axe central (X) du piston (18),
dans lequel les moyens d'accrochage comprennent des moyens de blocage (58, 59, 61) bloquant automatiquement la vis femelle (17) contre le piston (18) lorsque l'ensemble de vis mâle/femelle pré-assemblé (16, 17) est poussé dans un siège de poussée (46) du piston (18),
**caractérisé en ce que** les moyens de blocage (58, 59, 61) comprennent un anneau fermé élastiquement dilatable (58) introduit dans une rainure annulaire de la vis femelle et approprié pour s'encliqueter élastiquement dans une configuration de butée axiale contre un épaulement du piston, en réponse à une introduction de la vis femelle dans une mise en prise avec le piston,
et **en ce que** le piston forme à côté de l'épaulement une surface en forme de coin au moins partiellement inclinée par rapport à l'axe central (X) de sorte que :
- lorsque la vis femelle se rapproche du siège de poussée du piston, la surface en forme de coin déforme radialement l'anneau élastique fermé dans la rainure annulaire, permettant à la portion de poussée de la vis femelle d'être positionnée dans la position prédéfinie de celle-ci en contact avec le siège de poussée et :
- lorsqu'elle atteint la position prédéfinie de la portion de poussée en contact avec le siège de poussée, la surface en forme de coin libère l'anneau élastique fermé, de sorte à permettre un retour élastique de celui-ci dans une direction radiale de façon à entrer en prise dans un sens axial avec l'épaulement et empêcher la vis femelle de se détacher siège de poussée.
